Europäisches Patentamt

European Patent Office

Office européen des brevets

(19)

(11) Veröffentlichungsnummer: **0 025 170**
**B1**

(12) **EUROPÄISCHE PATENTSCHRIFT**

(45) Veröffentlichungstag der Patentschrift:
**02.05.85**

(21) Anmeldenummer: **80105059.2**

(22) Anmeldetag: **26.08.80**

(51) Int. Cl.⁴: **G 01 C 3/08**

(54) Schaltung zur sensorgesteuerten Entfernungsmessung.

(30) Priorität: **10.09.79 DE 2936521**

(43) Veröffentlichungstag der Anmeldung:
**18.03.81 Patentblatt 81/11**

(45) Bekanntmachung des Hinweises auf die Patenterteilung:
**02.05.85 Patentblatt 85/18**

(84) Benannte Vertragsstaaten:
**BE FR GB IT NL**

(56) Entgegenhaltungen:
**DE - A - 2 639 625**
**DE - A - 2 849 800**
**DE - A - 2 916 544**

**ELECTRONICS, 10. November 1977, Seiten 40-44,**
**"Honeywell's automatic-focus chip attracts a host of camera makers"**

(73) Patentinhaber: **Siemens Aktiengesellschaft, Berlin und München Wittelsbacherplatz 2, D-8000 München 2 (DE)**

(72) Erfinder: **Grassl, Hans-Peter, Dipl.-Phys., Regina-Ullmann-Strasse 34, D-8000 München 82 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung bezieht sich auf eine Schaltung zur sensorgesteuerten Entfernungsmessung.

Es liegt ihr die Aufgabe zugrunde, eine möglichst exakte Messung der Entfernung eines Gegenstandes vorzunehmen oder eine gute Scharfeinstellung bei einer Abbildung des Gegenstandes auf eine Bildebene zu bewirken. Diese Aufgabe wird durch eine Ausbildung der Schaltung nach dem kennzeichnenden Teil des Patentanspruchs 1 gelöst.

Der mit der Erfindung erzielbare Vorteil besteht insbesondere darin, dass die digitalen Bewertersignale lediglich von dem relativen Helligkeitsverlauf längs der projizierten Zeilenausschnitte abhängig sind, nicht jedoch von der absoluten Empfindlichkeit der Bildsensoren. Ausserdem wird jedes relative Helligkeitsmaximum bzw. -minimum unabhängig von der Grösse der Referenzspannung durch die logischen Bewertersignale erfasst, so dass die Zuverlässigkeit der Entfernungsmessung bzw. die Zuverlässigkeit der Scharfeinstellung auch hohen Anforderungen genügt.

Die Unteransprüche sind auf bevorzugte Ausgestaltungen und Weiterbildungen der Erfindung gerichtet.

Die Erfindung wird nachfolgend anhand der in der Zeichnung dargestellten, bevorzugten Ausführungsbeispiele näher erläutert. Dabei zeigt:

Fig. 1 ein erstes Ausführungsbeispiel,

Fig. 2 eine Teilschaltung von Fig. 1,

Fig. 3 Spannungs-Zeit-Diagramme zur Erläuterung der Fig. 1 und 2,

Fig. 4 eine schaltungstechnische Ausgestaltung einer Teilschaltung von Fig. 1,

Fig. 5 eine alternative Ausgestaltung der Teilschaltung nach Fig. 4,

Fig. 6 eine zweite alternative Ausgestaltung der Teilschaltung nach Fig. 4,

Fig. 7 Zeit-Diagramme zur Veranschaulichung der Digitalisierung der Sensorsignale,

Fig. 8 ein zweites Ausführungsbeispiel,

Fig. 9 ein drittes Ausführungsbeispiel,

Fig. 10 eine Schaltungsvariante zu Fig. 9,

Fig. 11 ein viertes Ausführungsbeispiel und

Fig. 12 ein fünftes Ausführungsbeispiel der Erfindung.

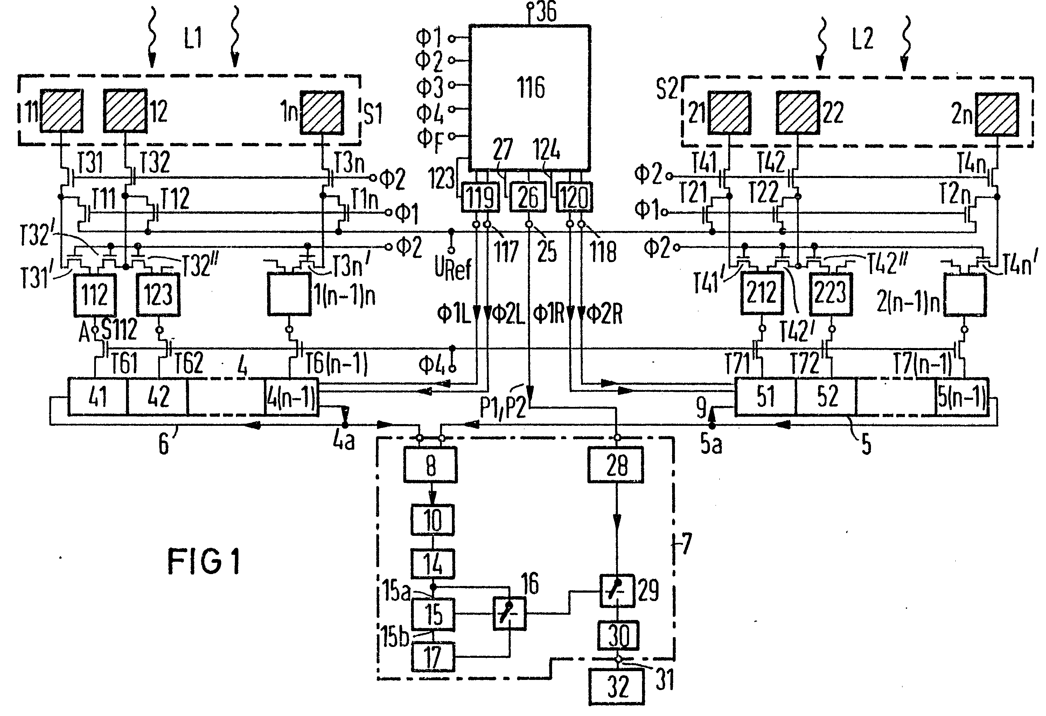

Die in Fig. 1 dargestellte Schaltung enthält zwei lineare Bildsensoren S1 und S2, die mit Sensorelementen 11, 12, 13....1n und 21, 22, 23...2n bestückt sind. Die Bildsensoren S1, S2 sind auf einem dotierten Halbleiterkörper eines ersten Leitfähigkeitstyps integriert.

Werden die Sensorelemente als Fotodioden realisiert, so stellen die schraffierten Rechtecke an einer Grenzfläche des Halbleiterkörpers angeordnete Bereiche eines zu dem ersten entgegengesetzten, zweiten Leitfähigkeitstyps dar. Die Sensorelemente 11...1n und 21...2n sind über individuell zugeordnete Schalttransistoren T11...T1n und T31...T3n sowie T21...T2n und T41...T4n mit einem Anschluss verbunden, der mit einer Konstantspannung $U_{Ref}$ beschaltet ist.

Die Gateelektroden der Schalttransistoren T11...T1n und T21...T2n sind jeweils an einen gemeinsamen Anschluss geführt, dem eine Taktimpulsspannung $\Phi 1$ zugeführt wird, während die Gateelektroden der Schalttransistoren T31...T3n und T41...T4n mit Anschlüssen verbunden sind, die an einer Impulsspannung $\Phi 2$ liegen. Jeweils zwei benachbarte Sensorelemente, z.B. 11 und 12, sind über Schalttransistoren, z.B. T31 und T32, und weitere Schalttransistoren, z.B. T31' und T32', deren Gateelektroden ebenfalls mit der Impulsspannung $\Phi 2$ beschaltet sind, mit den beiden Eingängen eines Bewerters, z.B. 112, verbunden. Die Bewerter sind mit den Bezugszeichen 112...1(n–1)n und 212...2(n–1)n versehen. Die den Bewertern 123...1(n–1)n und 212...2(n–1)n zugeordneten weiteren Schalttransistoren sind mit T32'', T33'...T3n und T41', T42', T43'...T4n' bezeichnet.

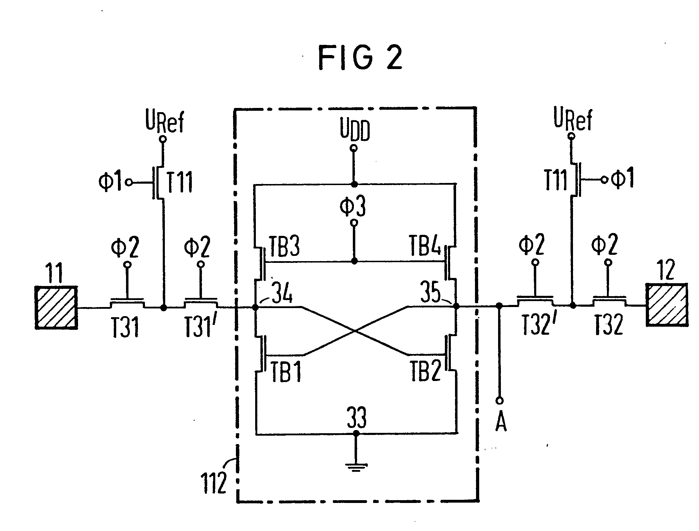

Eine zweckmässige schaltungstechnische Durchbildung der Bewerter 112...1(n–1)n und 212...2(n–1)n soll anhand der Fig. 2 noch näher beschrieben werden. Diese Bewerter können in Abhängigkeit von den Grössenrelationen der Sensorsignale, die ihren beiden Eingängen jeweils zugeführt werden, einen von zwei möglichen Schaltzuständen einnehmen. Ihre digitalisierten Ausganssignale S112...S1(n–1)n und S212...S2(n–1)n, die an den Ausgängen A auftreten und je nach dem eingenommenen Schaltzustand dem logischen Spannungspegel «1» oder «0» entsprechen, werden über Schalttransistoren T61...T6(n–1) und T71...T7(n–1), deren Gateelektroden mit einer gemeinsamen Taktimpulsspannung $\Phi 4$ beaufschlagt sind, den Eingängen der einzelnen Stufen 41, 42...4(n–1) und 51, 52...5(n–1) zweier den Bildsensoren individuell zugeordneter Schieberegister 4 und 5 zugeführt. Diese sind mit Vorteil als dynamische, zweiphasige Schieberegister ausgebildet. Das Schieberegister 4 weist zwei Eingänge auf, die mit Taktimpulsspannungen $\Phi 1L$ und $\Phi 2L$ beschaltet sind, während das Schieberegister 5 zwei Eingänge besitzt, denen die Taktimpulsspannung $\Phi 1R$ und $\Phi 2R$ zugeführt werden. Der Ausgang 4a der Stufe 4(n–1) ist einerseits über eine Leitung 6 mit dem Eingang der Stufe 41 verbunden und andererseits an einen ersten Eingang einer in einem Auswerteteil 7 angeordneten logischen Teilschaltung 8. Der Ausgang 5a der Stufe 5(n–1) ist in entsprechender Weise über eine Leitung 9 an den Eingang der Stufe 51 geführt und andererseits mit einem zweiten Eingang von 8 verbunden.

Der logischen Teilschaltung 8 ist ein Zähler 10 nachgeschaltet, dessen Ausgang über einen Speicher 14 mit dem ersten Eingang eines digitalen Komparators 15 und über einen elektronischen Schalter 16 mit einem Speicher 17 verbunden ist. Der Ausgang des Speichers 17 ist an einen zweiten Eingang des digitalen Komparators 15 geführt.

Ein Taktimpulsgeber 116 ist mit Ausgängen für die Taktimpulsspannungen $\Phi 1$, $\Phi 2$ und $\Phi 4$ versehen. Über weitere Ausgänge 117 und 118 werden Taktimpulsspannungen $\Phi 1L$ und $\Phi 2L$ sowie $\Phi 1R$ und $\Phi 2R$ abgegeben, wobei in Serie zu den Ausgängen 117 eine Torschaltung 119 und in Serie zu den Ausgängen 118 eine Torschaltung 120 angeordnet sind. Die Steuereingänge von 119 und 120 werden über Leitungen 123 und 124 mit noch näher zu beschreibenden Steuersignalen beaufschlagt. Der Taktimpulsgeber weist einen weiteren Ausgang 25 auf, zu dem eine weitere Torschaltung 26 in Serie angeordnet ist. Diese wird über eine Leitung 27 mit einem weiteren Steuersignal belegt. Der Ausgang 25 ist mit dem Eingang eines Zählers 28 verbunden, dessen Ausgang über einen elektronischen Schalter 29 mit dem Speicher 30 in Verbindung steht. Der Ausgang 31 des Speichers 30 ist mit einer weiter unten beschriebenen Vorrichtung 32 beschaltet.

Fig. 2 zeigt eine zweckmässige Ausgestaltung der Bewerter 112...1(n−1)n und 212...2(n−1)n anhand des Bewerters 112. Er besteht aus einer Flip-Flop-Schaltung mit den Schalttransistoren TB1 und TB2 und den als schaltbare Lastelemente betriebenen Transistoren TB3 und TB4. Die Sourceanschlüsse von TB1 und TB2 sind über einen gemeinsamen Anschluss 33 an das Bezugspotential der Schaltung angeschlossen, die Drainanschlüsse von TB3 und TB4 über einen gemeinsamen Anschluss an eine Versorgungsspannung $U_{DD}$. Der Eingangsknoten des Bewerters 112 ist mit 34 bezeichnet, der mit dem Ausgang A in Verbindung stehende Ausgangsknoten mit 35. Zwischen den Gateelektroden von TB1 und TB2 und den Knoten 34 und 35 besteht eine Kreuzkopplung. Die Gateelektroden von TB3 und TB4 sind über einen gemeinsamen Anschluss mit einer Taktimpulsspannung $\Phi3$ beschaltet. Die an die Knoten 34 und 35 angeschlossenen Schaltungsteile T11, 11, T31 und T31′ sowie T12, 12, T32 und T32′ wurden bereits anhand der Fig. 1 beschrieben.

Das bei der Erfindung verwendete Prinzip der Entfernungsmessung eines Gegenstandes geht davon aus, dass von diesem über zwei optische Einrichtungen zwei getrennte Abbildungen gewonnen werden, deren entfernungsabhängige Relativpositionen ausgewertet werden. Die Lichtstrahlen L1 in Fig. 1 gehen dabei von dem in seiner Entfernung zu bestimmenden Gegenstand aus. Sie projizieren über eine erste optische Einrichtung eine Abbildung desselben in der Weise auf die Ebene des Bildsensors S1, dass dieser auf einen Zeilenausschnitt der Abbildung ausgerichtet ist. In analoger Weise projizieren die Lichtstrahlen L2, die über eine zweite optische Einrichtung von dem Gegenstand gewonnen werden, eine zweite Abbildung desselben auf die Ebene des Bildsensors S2, und zwar derart, dass dieser auf den gleichen Zeilenausschnitt gerichtet ist, wenn sich der Gegenstand in einem vorgegebenen Abstand, z.B. im Abstand «unendlich» befindet. Verändert sich der Abstand des Gegenstandes gegenüber dem vorgegebenen Wert, so verschieben sich die auf die Bildsensoren S1 und S2 projizierten Zeilenausschnitte dementsprechend in Längsrichtung der Bildsensoren. Die Grösse der gegenseitigen Verschiebung stellt dabei ein Mass für die tatsächliche Entfernung des Gegenstandes dar. Eine ähnliche Methode der Entfernungsmessung, bei der die vorstehend beschriebenen relativen Verschiebungen zweier Abbildungen des Gegenstandes ausgenutzt werden, aber anstelle von linearen Bildsensoren flächenhafte Anordnungen von Fotodioden vorgesehen sind, ist beispielsweise aus der Zeitschrift «Electronics» vom 10.11.1977, Seiten 40 bis 44, bekannt.

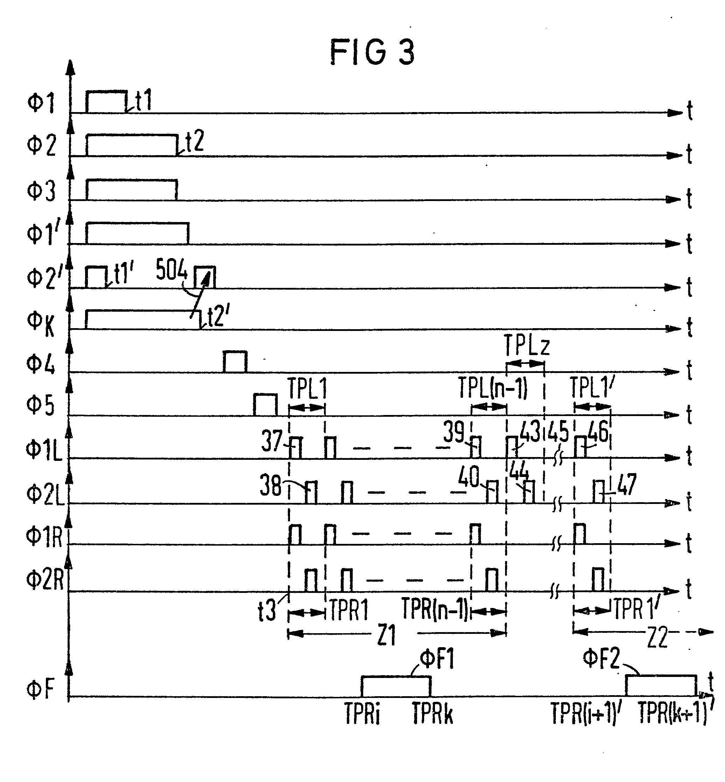

Die Wirkungsweise der Schaltung nach den Fig. 1 und 2 ergibt sich in Verbindung mit den Impuls-Zeit-Diagrammen nach Fig. 3. Wird einem Eingang 36 des Taktimpulsgebers 116 ein Triggerimpuls zugeführt, so gibt dieser zunächst einen Taktimpuls $\Phi1$ und einen Impuls $\Phi2$ ab. Damit werden die Sensorelemente, z.B. 11, auf die Konstantspannung $U_{Ref}$ rückgesetzt. Durch die im leitenden Zustand befindlichen Transistoren T31′ sowie T32′ werden auch der Eingangsknoten 34 und der Austangsknoten 35 auf diese Spannung rückgesetzt. Beim Abschalten des Taktimpulses $\Phi1$ beginnen sich in den Sensorelementen, z.B. 11, durch die einfallenden Lichtstrahlen L1 bzw. L2 erzeugte Ladungsträger anzusammeln, wobei in den Sensorelementen ein Spannungsabfall entsteht. Je grösser die in den Sensorelementen jeweils angesammelten, optisch erzeugten Ladungen sind, desto stärker verringert sich das Potential an den zugeordneten Eingangsknoten, z.B. 34, der Bewerter. Die Zeitspanne zwischen dem Ende des Taktimpulses $\Phi1$ zum Zeitpunkt t1 und dem vorgegebenen Ende des Impulses $\Phi2$ zum Zeitpunkt t2 wird als Integrationszeit bezeichnet. Nur innerhalb dieser Zeitspanne sammeln sich optisch erzeugte Ladungen in den Sensorelementen an. Nach Beendigung des Impulses $\Phi2$ wird ein von einem weiteren Ausgang von 116 gelieferter Taktimpuls $\Phi3$ an die Gateelektroden von TB3 und TB4 gelegt, so dass die Flip-Flop-Schaltungen der Bewerter aktiviert werden. An den Ausgangsknoten, z.B. 35, stellt sich für den Fall, dass am Knoten 34 ein grösserer Potentialabfall aufgetreten war als am Knoten 35, eine Spannung ein, die etwa der Versorgungsspannung $U_{DD}$ entspricht (logische «1»). Tritt dagegen am Knoten 35 ein grösserer Spannungsabfall auf als am Knoten 34, so gelangt der Knoten 35 auf ein Potential, das etwa dem Bezugspotential am Anschluss 33 entspricht (logische «0»). Damit gibt jeder Bewerter ein digitalisiertes Sensorsignal, z.B S112 ab, dessen Wert abhängig ist von dem relativen Grössenverhältnis der optisch erzeugten Ladungen in den beiden mit diesem Bewerter verbundenen Sensorelementen. Beim Auftreten eines Taktimpulses $\Phi4$ werden dann die digitalisierten Sensorsignale, z.B. S112, den Eingängen der zugeordneten Stufen, z.B. 41, der Schieberegister 4 und 5 zugeführt und in diesen gespeichert.

Der Taktimpulsgeber 116 liefert anschliessend Taktimpulsfolgen $\Phi1L$, $\Phi2L$, $\Phi1R$ und $\Phi2R$, die die in den Stufen der Schieberegister 4 und 5 enthaltenen Sensorsignale jeweils um eine Stufe verschieben. Vor dem Auftreten der Taktimpulse 37 und 38, die zu einer Taktperiode TPL1 gehören, liegt das Sensorsignal S1(n−1)n am Ausgang 4a. Die Taktimpulse 37 und 38 verschieben das Sensorsignal S1(n−1)n einerseits in die Stufe 41 und die Information S1(n–2)(n–1) an den Ausgang 4a und so weiter. Durch die Taktimpulse 39 und 40 der Taktperiode TPL(n–1) gelangt schliesslich nach einem vollen Informationsumlauf wieder das Sensorsignal S1(n–1)n an den Ausgang 4a. Es folgt eine Taktperiode TPLz mit den Taktimpulsen 43 bis 44, durch die das Sensorsignal S1(n–2)(n–1) am Ausgang 4a erscheint. Nach einer sich anschliessenden, mit 45 bezeichneten Austastlücke schieben die Taktimpulse 46 und 47 der Taktperiode TPL1′ die Sensorsignale wieder um eine Stufe weiter, so dass S1(n–2)(n–1) in die Stufe 41 gelangt und S1(n–3)(n–2) an den Ausgang 4a durchgeschaltet wird.

In einem ersten Auslesezyklus Z1, der zum Zeitpunkt t3 beginnt und die Taktperioden TPL1 bis TPL(n–1) umfasst, werden also die Sensorsignale S1(n–1)n bis S112 und wieder S1(n–1)n am Ausgang 4a seriell ausgegeben. In einem zweiten Auslesezyklus Z2, der mit der Taktperiode TPL1′ beginnt und weitere (n–2) Taktperioden umfasst, erfolgt eine zweite serielle Ausgabe aller Sensorsignale des Bildsensors 1, wobei die Signale S1(n–2)(n–1) und wieder bis S1(n–2)(n–1) an 4a auftreten. Innerhalb des ersten Auslesezyklus Z1 wird das Schieberegister 5 ebenfalls mit (n–1) Taktperioden TPR1 bis TPR(n–1) beaufschlagt, während den Taktimpulsen 43 und 44 entsprechende Impulse fehlen. Das hat zur Folge, dass zu Beginn von Z2 das Sensorsignal S2(n–1)n am Ausgang 5a und das Signal S1(n–2)(n–1) am Ausgang 4a anliegen.

Somit werden im ersten Auslesezyklus Z1 die Signalpaare S1(n–1)n und S2(n–1)n, S1(n–2)(n–1) und S2(n–2)(n–1) usw. an 4a und 5a seriell ausgelesen, im zweiten Auslesezyklus Z2 dagegen die Signalpaare S1(n–2)(n–1) und S2(n–1)n, S1(n–3)(n–2) und S2(n–2)(n–1), usw. Die seriell ausgelesenen Informationen der Schieberegister 4 und 5 sind also in zwei aufeinander folgenden Auslesezyklen um jeweils eine Signalbreite gegeneinander verschoben. Nach (n–1) Auslesezyklen haben sie dann wieder dieselbe zeitliche Zuordnung wie im Zyklus Z1. In Fig. 1 kann diese Verschiebung dadurch erreicht werden, dass die Torschaltung 120 über die Leitung 124 während des Auftretens der Taktimpulse 43 und 44, d.h. zwischen den Taktperioden TPR(n–1) und TPR1′, gesperrt wird. In diesem Zeitraum kann die Torschaltung 26 über die Steuerleitung 27 geöffnet werden, so dass einer der Impulse 43 oder 44 oder ein von diesen abgeleiteter Impuls am Ausgang 25 als Verschiebeimpuls P1 erscheint. Dieser Verschiebeimpuls P1 kennzeichnet dabei den Beginn eines neuen Auslesezyklus und eine gegenseitige Verschiebung der an den Ausgängen 4a und 5a seriell ausgelesenen Sensorsignale um jeweils eine Signalbreite.

Die innerhalb eines Informationszyklus, z.B. Z1, an 4a und 5a seriell ausgelesenen Sensorsignalpaare werden in der logischen Teilschaltung 8 nach der Exklusiv-ODER-Funktion bewertet. Dabei tritt am Ausgang von 8 immer dann ein Ausgangsimpuls auf, wenn die eingangsseitig über 4a und 5a zugeführten digitalen Signale übereinstimmen.

Stimmen sie nicht überein, so wird von 8 kein Ausgangsimpuls abgegeben. Die Teilschaltung 8 kann aber auch so ausgebildet sein, dass sie nur die Übereinstimmung zweier «1»-Signale oder zweier «0»-Signale an ihren Eingängen durch einen Ausgangsimpuls angibt.

Der Zähler 10, der vor Beginn jedes Auslesezyklus, also insbesondere in den Austastlücken 45, auf Null rückgesetzt wird, zählt dann die Anzahl der Übereinstimmungen innerhalb eines solchen Zyklus.

Hierbei wird der Zähler 10 allerdings nur während eines Teils jedes Auslesezyklus wirksam geschaltet, der durch einen von 116 abgegebenen Impuls ΦF bestimmt wird. Nimmt man an, dass der Zähler 10 im Auslesezyklus Z1 die Übereinstimmungen innerhalb der Taktperioden TPRi bis TPRk zählt, wobei die Differenz k–i etwa n/2 oder 3n/4 beträgt, so zählt er im Auslesezyklus Z2 die Übereinstimmungen innerhalb der Taktperioden TPR(i+1)′ bis TPR(k+1)′. Betrachtet man die Impulse ΦF1 und ΦF2 jeweils als «Auslesefenster», so haben sich die Sensorsignale des Schieberegisters 5 im Fenster ΦF2 gegenüber dem Fenster ΦF1 um eine Signalbreite nach links (Fig. 3) verschoben. Im nächsten Auslesezyklus Z3, in dem der entsprechende Impuls ΦF3 dieselben Taktimpulsperioden umfasst wie in Z2, haben sich dann die Signale des Schieberegisters 4 im nächstfolgenden «Fenster» ΦF3, das nicht mehr dargestellt ist, um eine Signalbreite nach rechts verschoben. Wird das «Fenster» generell im ersten Auslesezyklus Z1 und in den weiteren ungeraden Auslesezyklen um eine Taktperiodenlänge jeweils nach rechts verschoben, so entspricht das einer abwechselnden Verschiebung der an 5a bzw. 4a abgegriffenen Sensorsignalfolgen in dem jeweiligen Fenster ΦF um eine Signalbreite nach links bzw. rechts. Diejenigen Impulse ΦF, die die vom Zeilenanfang und vom Zeilenende einer der Sensorelementenzeilen abgeleiteten Bewertersignale gleichzeitig umschliessen würden, werden vom Taktimpulsgeber 116 unterdrückt. Hierdurch wird erreicht, dass die «Fenster» ΦF die Auswertung von denjenigen Sensorsignalen ausschalten, die von den in vertauschter Zuordnung nebeneinander stehenden Anfangs- und Endabschnitten der projizierten Zeilenausschnitte abgeleitet worden sind, so dass sie keine Aussage über den tatsächlichen Helligkeitsverlauf längs des Zeilenausschnitts vermitteln.

Ist das Zählerergebnis, das dem Eingang 15a des digitalen Komparators 15 zugeführt wird, grösser als das an seinem Eingang 15b liegende digitale Signal, so werden die Steuereingänge der Schalter 16 und 29 mit einem Komparatorsignal beaufschlagt, so dass beide Schalter die an ihre Eingänge gelegten Signale an den jeweiligen Ausgang übertragen. Nachdem das Zählergebnis der Übereinstimmungen des ersten Auslesezyklus Z1 als erstes digitales Signal dem Speicher 14 und über diesen dem Eingang 15a zugeführt wird, wird danach nur noch ein solches Zählergebnis eines weiteren Auslesezyklus Zi in den Speicher 17 übernommen, das grösser ist als das grösste jeweils zuvor gespeicherte. Die am Ende der Auslesezyklen Z1, Z2 usw. auftretenden Verschiebeimpulse P1, P2 usw. werden im Zähler 28 gezählt. Da der Schalter 29 synchron mit dem Schalter 16 betätigt wird, überträgt er immer beim Auftreten eines grösseren Zählergebnisses im Zähler 10 den jeweiligen Zählerstand von 28 auf den Speicher 30. Damit ist im Speicher 30 nach n–1 Informationszyklen die Anzahl der Verschiebeimpulse Pi gespeichert, die diejenige Informationsverschiebung zwischen den Sensorsignalen der Schieberegister 4 und 5 kennzeichnet, bei der die grösste Anzahl von Übereinstimmungen auftritt. Mit anderen Worten: die Anzahl der im Speicher 30 gespeicherten Schiebeimpulse Pi gibt diejenige relative Verschiebung der in den Schieberegistern 4 und 5 umlaufenden Sensorsignale ab, bei der eine maximale Korrelation der miteinander verglichenen Sensorsignale besteht.

Die in Fig. 3 angedeuteten Austastlücken 45, die z.B. zum jeweiligen Rücksetzen des Zählers 10 auf Null erforderlich sind, werden durch eine entsprechende Sperrung der Torschaltungen 119 und 120 über ihre Steuerleitungen 123 und 124 erzeugt.

Das am Ausgang 31 des Speichers 30 auftretende digitale Signal wird einer Vorrichtung 32 zugeführt, die als eine Anzeigevorrichtung aufgefasst werden kann, die nach einer entsprechenden Codierung des digitalen Signals eine digitale oder analoge Anzeige der Entfernung des Gegenstandes liefert. Andererseits kann die Vorrichtung 32 auch aus einer an sich bekannten Einstellvorrichtung einer fotografischen oder elektronischen Kamera bestehen, die den Abstand eines gegenüber einer Bildebene bewegbaren Objektivs so einstellt, dass der Gegenstand auf diese Bildebene scharf abgebildet wird. Eine Vorrichtung dieser Art ist beispielsweise in der deutschen Patentanmeldung P 2 813 915.3 (VPA 78 p 7025) und in der Zeitschrift «Electronics» vom 10. Nov. 1977, auf den Seiten 40 bis 44, beschrieben.

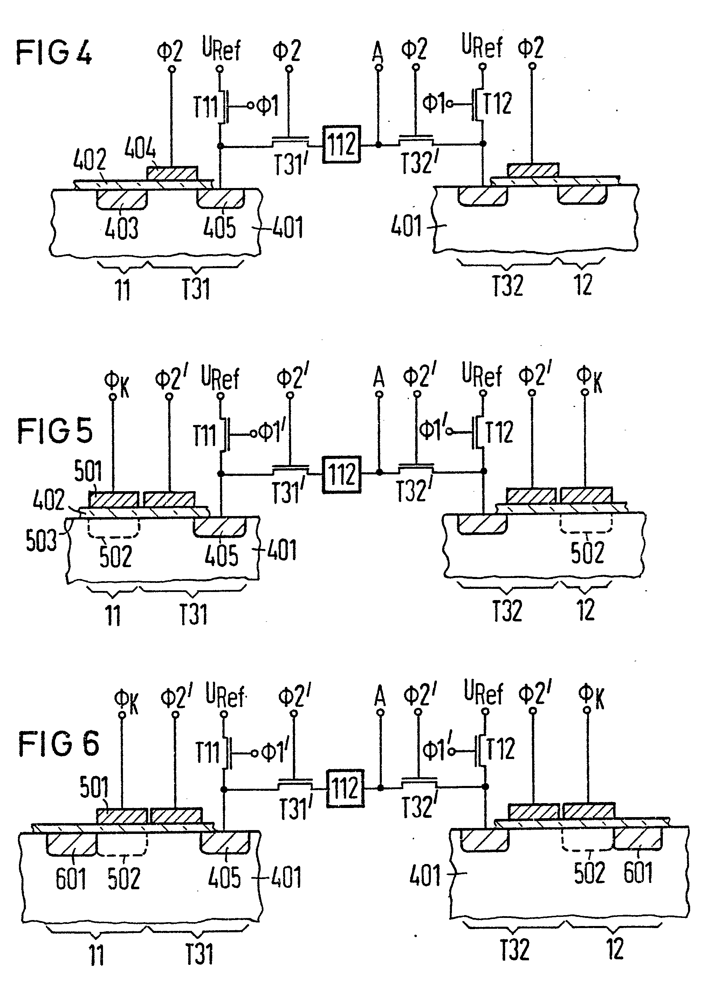

Fig. 4 zeigt eine bevorzugte schaltungstechnische Ausbildung der Sensorelemente 11...1n und 21...2n sowie der angrenzenden Schaltungsteile anhand der Sensorelemente 11 und 12. Auf einem dotierten Halbleiterkörper 401, z.B. aus p-dotiertem Silizium, ist eine dünne, elektrisch isolierende Schicht 402, z.B. aus $SiO_2$, vorgesehen. Der Bildsensor 11 ist hierbei als eine Fotodiode ausgebildet, die aus dem n-dotierten Halbleitergebiet 403 besteht. Dieses Gebiet bildet gleichzeitig auch das Source-Gebiet des Transistors T31. Das Gate von T31 ist auf der isolierenden Schicht 402 angeordnet und mit 404 bezeichnet. Das Drain-Gebiet von T31 trägt das Bezugszeichen 405. Dieses Gebiet ist einerseits über den Transistor T11 mit einem Anschluss verbunden, der mit der Konstantspannung $U_{Ref}$ beschaltet ist, und ist weiterhin über T31' mit dem Eingang des Bewerters 112 verbunden. Der zweite Eingang von 112 ist über die Transistoren T32 und T32' mit dem Sensorelement 12 verbunden, wobei diese Teile entsprechend T31, T31' und 11 aufgebaut sind. Das Draingebiet von T32 ist über einen Transistor T12 mit der Referenzspannung $U_{Ref}$ beschaltet. Schliesslich ist der Ausgang des Bewerters 112 entsprechend Fig. 1 mit A bezeichnet.

Eine alternative Schaltung zu Fig. 4 zeigt Fig. 5. Danach besteht das Sensorelement 11 aus einem MIS-Kondensator (Metall-Isolierschicht-Halbleiter-Kondensator), der ein Gate 501 besitzt, das auf der Isolierschicht 402 angeordnet ist. Das Gate 501 ist z.B. aus hochdotiertem, polykristallinem Silizium gefertigt und liegt an einer Taktimpulsspannung $\Phi_K$, unter deren Einfluss sich eine Raumladungszone 502 im Halbleiterkörper 401 ausbildet. Die weiteren Schaltungsteile von Fig. 5 entsprechen den mit gleichen Bezugzeichen versehenen Schaltungsteilen von Fig. 4, wobei darauf hingewiesen sei, dass die Transistoren T11 und T12 mit einer Taktimpulsspannung $\Phi 1'$ und die Transistoren T31 und T32 sowie T31' und T32' mit einer Taktimpulsspannung $\Phi 2'$ belegt sind. Die gleichzeitig beginnenden Taktimpulse $\Phi 1'$, $\Phi 2'$ und $\Phi_K$ bewirken bis zum Zeitpunkt t1' ein Rücksetzen des MIS-Kondensators im Bereich der Grenzfläche 503 des Halbleiterkörpers 401 etwa auf den Wert der Referenzspannung $U_{Ref}$. Zum Zeitpunkt t1' beginnt in dem weiterhin mit $\Phi_K$ beaufschlagten MIS-Kondensator die Integrationszeit, in der optisch erzeugte Ladungsträger gesammelt werden. Mit dem Ende von $\Phi_K$ zum Zeitpunkt t2' ist auch das Ende der Integrationszeit erreicht. Kurz vor dem Zeitpunkt t2' wird ein neuer Taktimpuls $\Phi 2'$ angelegt, so dass eine durch Pfeil 504 (Fig. 3) angedeutete Ladungsübernahme von 11 nach 405 stattfinden kann, die am Eingang des Bewerters 112 eine entsprechend Potentialänderung hervorruft. Der Taktimpuls $\Phi 1'$ muss, wie in Fig. 3 angedeutet ist, vor dieser Ladungsübernahme abgeschaltet werden.

Fig. 6 unterscheidet sich von Fig. 5 lediglich dadurch, dass eine Fotodiode 601 neben dem MIS-Kondensator 501, 502 angeordnet ist, und zwar auf der von T31 abgewandten Seite desselben. Die Gateelektroden von T31 und T32 sowie T31' und T32' sind mit der Impulsspannung $\Phi 2'$ beschaltet, während den Gateelektroden von T11 und T12 die Taktimpulsspannung $\Phi 1'$ zugeführt wird.

Die Kapazität der Sensorelemente 11 und 12 nach Fig. 5 ist grösser als die Kapazität der Sensorelemente nach Fig. 4, während die Kapazität der Sensorelemente 11 und 12 nach Fig. 6 grösser ist als die der Sensorelemente nach Fig. 5.

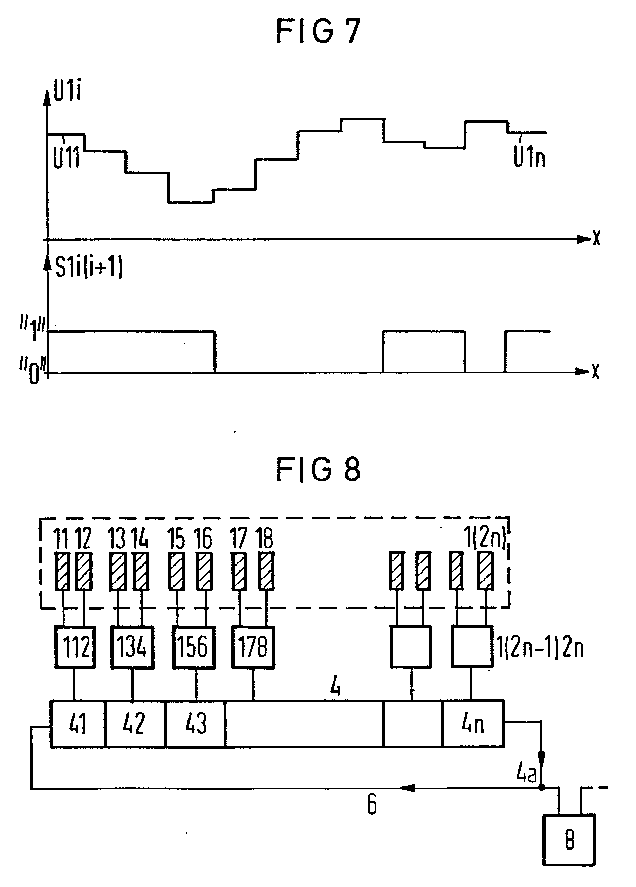

In Fig. 7 ist im oberen Diagramm über der Länge x des Bildsensors S1 eine Folge von analogen Sensorsignalen U1i aufgetragen, die an den Ausgängen der Sensorelemente 11...1n auftreten. Dabei ist das Signal des Sensorelements 11 mit U11 bezeichnet, das des Sensorelements 1n mit U1n. Das untere Diagramm zeigt die zugehörigen digitalisierten Bewertersignale S1i(i+1), die ebenfalls über x aufgetragen sind. Wie hieraus ersichtlich ist, wird für jeden Spannungssprung, der im oberen Diagramm von einem grösseren Spannungspegel zu einem kleineren hin erfolgt, das Signal «1» erhalten, für jeden Spannungssprung, der von einem kleineren auf einen grösseren Spannungspegel erfolgt, dagegen das Signal «0». Damit findet eine digitale Codierung der Sensorsignale statt, die nur von den relativen Grössenänderungen der Signale U1i längs der Zeile des Bildsensors S1 ausgeht.

Fig. 8 zeigt ein zweites Ausführungsbeispiel der Erfindung, bei dem die Sensorelemente des Bildsensors S1 in Längsrichtung desselben so schmal ausgebildet sind, dass sie etwa der halben Abmessung der Bewerter entsprechen. In diese Bewerter wurden aus Gründen einer einfachen Darstellung auch die Schalttransistoren T11, T12..., T31, T32..., T31', T32'...und T61, T62... einbezogen. Die Stufen des Schieberegisters 4 wurden mit 41...4n bezeichnet. Bei diesem Ausführungsbeispiel sind die Ausgänge zweier nebeneinander liegender Sensorelemente, z.B. 11 und 12, mit den beiden Eingängen eines Bewerters, z.B. 112, verbunden. Die Ausbildung eines separaten Sensorelements für jeden Bewertereingang verhindert eine Rückwirkung eines Bewerters auf den Eingang eines benachbarten Bewerters über die Verbindungsleitung zwischen zwei Eingängen derselben auch ohne die Transistoren T31', T32', T32"...T3n' nach Fig. 1. Für den Sensor S2 und die mit ihm verbundenen Bewerter sowie das den letzteren nachgeschaltete Schieberegister 5 ist nach Fig. 8 der gleiche Aufbau vorgesehen wie für die betreffenden S1 zugeordneten Schaltungsteile.

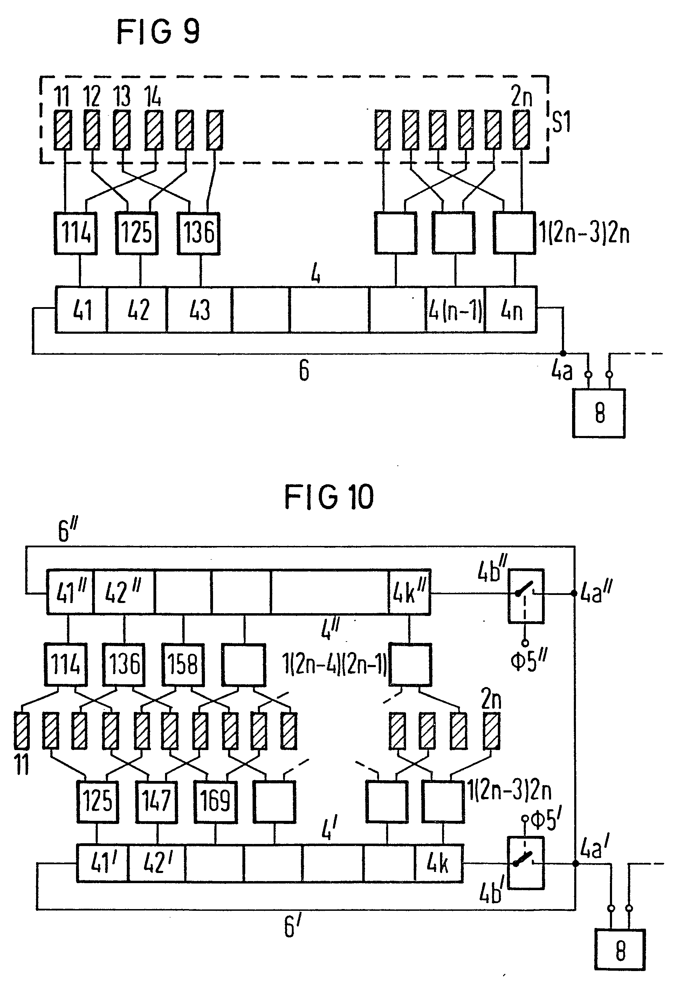

Die in Fig. 9 dargestellte Anordnung unterscheidet sich von Fig. 8 nur dadurch, dass jeder der Bewerter 114...1(2n–3)2n mit seinen beiden Eingängen an die Ausgänge von zwei Sensorelementen geschaltet ist, die jeweils durch zwei weitere Sensorelemente voneinander getrennt sind. In diesem Fall ist der Helligkeitskontrast, der von den beiden mit einem Bewerter verbundenen Sensorelementen ausgewertet wird, grösser als bei der Anordnung nach Fig. 8, bei der die beiden Sensorelemente einander unmittelbar benachbart sind. Die Digitalisierung der Sensorsignale gemäss Fig. 9 führt daher zu einer besonders betriebssicheren Entfernungsmessung bzw. Scharfeinstellung.

Bei der Anordnung nach Fig. 10 sind die Bewerter 114, 125, 136... entsprechend Fig. 9 an die Sensorelemente 11...2n angeschlossen. Der Unterschied besteht darin, dass in Fig. 10 ein Teil der Bewerter 125, 147... auf der einen Seite der Sensorzeile und der übrige Teil, z.B. 114, 136... auf der anderen Seite der Sensorzeile angeordnet sind. Dadurch verringert sich die Anzahl der Kreuzungspunkte der Leitungen, die die Bewerter und Sensorelemente miteinander verbinden, und die Auflösung der Anordnung wird verdoppelt. Der unteren Reihe von Bewertern 125, 147, 169 usw. sind die Stufen 41', 42"...4k eines Schieberegisters 4' individuell zugeordnet, dessen Ausgang 4a' über eine Leitung 6' mit dem Eingang der Stufe 41' und weiterhin mit dem ersten Eingang der logischen Teilschaltung 8 verbunden ist. In analoger Weise sind der oberen Reihe von Bewertern 114, 136 usw. die Stufen 41", 42"...4k" eines Schieberegisters 4" zugeordnet, dessen Ausgang 4a" einerseits mit dem Ausgang 4a' und andererseits über eine Leitung 6" mit dem Eingang der Stufe 41" verbunden ist. In Serie zu den Ausgängen 4a' und 4a" sind elektronische Schalter 4b' und 4b" vorgesehen, deren Steuereingänge mit Taktimpulsspannungen $\Phi 5'$ und $\Phi 5"$ beschaltet sind. Dem Schieberegister 4' werden Taktimpulsspannungen zugeführt, deren Taktperioden jeweils durch Zwischenperioden voneinander getrennt sind, die die gleiche Länge aufweisen wie die Taktperioden. In diesen Zwischenperioden liegen dann jeweils die Taktperioden der dem Schieberegister 4" zugeführten Taktimpulsspannungen. Tritt nun ein Impuls $\Phi 5'$ innerhalb einer Taktperiode des Schieberegisters 5' und ein Impuls $\Phi 5"$ innerhalb der nachfolgenden Taktperiode des Schieberegisters 4" auf usw., so werden die digitalisierten Sensorsignale der Bewerter 1(2n–3)2n, 1(2n–4)(2n–1) usw. seriell am Ausgang 4a' ausgelesen.

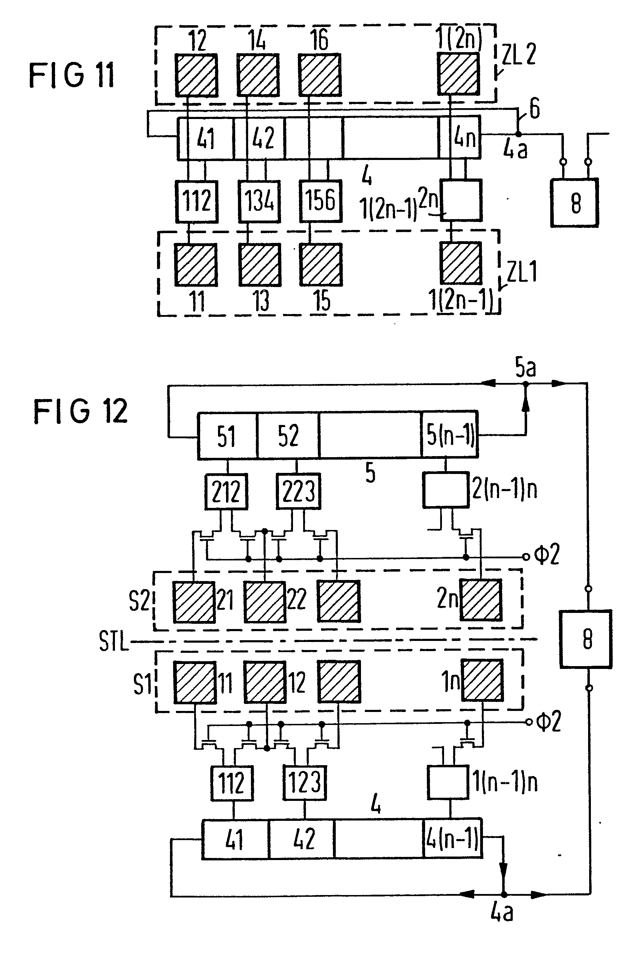

In Fig. 11 sind die Sensorelemente 11, 12...1(2n) mit den gleichen Bewertern 112, 134, 156 usw. wie in Fig. 8 verbunden. jedoch mit dem Unterschied, dass zwei an einem Bewerter angeschalteten Sensorelemente, z.B. 11 und 12, nicht nebeneinander in einer Sensorzeile liegen, sondern in zwei Zeilen ZL1 und ZL2. Hierbei haben diese Sensorelemente einen Abstand voneinander, der z.B. der Abmessung zweier Sensorelemente entspricht. Durch den grösseren Helligkeitskontrast, der über die im Abstand voneinander angeordneten Sensorelemente aus dem projizierten Zeilenausschnitt gewonnen wird, ergibt sich eine exakte und betriebssichere Digitalisierung. Über ein Schieberegister 4, das so angeordnet ist, dass seine an die Bewerter angeschlossene Stufen 41, 42...4n jeweils zwischen dem zugeordneten Bewerter und einem mit diesem verbundenen Sensorelement liegen, erfolgt eine serielle Auslesung der Ausgangssignale aller Bewerter über den Ausgang 4a.

Schliesslich ist in Fig. 12 eine Schaltung nach der Erfindung dargestellt, bei der die beiden Bildsensoren S1 und S2 nebeneinander angeordnet sind, so dass ihre Sensorelement 11...1n und 21...2n in zwei Zeilen nebeneinander liegen. Die Bewerter 112, 123...1(n–1)n und 212, 223...2(n–1)n sind jeweils auf der Seite der zugehörigen Bildsensoren S1 und S2 angeordnet. Die Schieberegister 4 und 5 liegen neben den mit ihnen verbundenen Bewertern.

Dieses Ausführungsbeispiel kann herangezogen werden, wenn die Abbildungen des Gegenstandes jeweils nur zur Hälfte auf die Ebene der Bildsensoren S1 und S2 projiziert werden, wobei die obere Hälfte der einen Abbildung auf den Teil der Bildebene fällt, der oberhalb der Schnittlinie STL liegt, während die untere Hälfte der anderen Abbildungen auf den unterhalb der Schnittlinie STL liegenden Teil der Bildebene projiziert wird. Die mittels der Bildsensoren S1 und S2 ausgewerteten Zeilenausschnitte liegen dabei an den jeweiligen Grenzen der Abbildungshälften, die der Linie STL benachbart sind. Eine solche Art der Abbildungsprojektion ist auch in der deutschen Patentanmeldung P 2 838 647.2 (VPA 78 P 1164) beschrieben.

Die beschriebenen und dargestellten Schaltungen können mit besonderem Vorteil ganz oder teilweise auf einem dotierten Halbleiterkörper monolithisch integriert werden. Dabei ist der Halbleiterkörper, z. B. 401, vorzugsweise p-leitend ausgebildet und der übrige Schaltungsaufbau in MOS-n-Kanal-Technik ausgeführt. Der Halbleiterkörper liegt auf einem Bezugspotential, wobei die angegebenen Spannungen und Potentiale gegenüber diesem jeweils ein positives Vorzeichen aufweisen. Bei einem n-leitenden Halbleiterkörper und einer MOS-p-Kanaltechnik werden diese Vorzeichen negativ.

Die in Fig. 1 dargestellten Schalttransistoren T31...T3n und T41...T4n können auch wegfallen, wobei die Schaltfunktion von T31 durch T31', die von T32 durch die Transistoren T32' und T32'' usw. übernommen werden.

## Patentansprüche

1. Schaltung zur sensorgesteuerten Entfernungsmessung, dadurch gekennzeichnet, dass zwei lineare, mit Sensorelementen (11..., 21...) bestückte Bildsensoren (S1, S2) vorgesehen sind, auf die jeweils Ausschnitte der gleichen Zeilen zweier von einem Gegenstand getrennt erhaltener Abbildungen projiziert werden, dass den Sensorelementen Bewerter (112..., 212) nachgeschaltet sind, die in Abhängigkeit von der Grösse der in den Sensorelementen (11..., 21...) optisch erzeugten elektrischen Ladungen zwischen zwei unterschiedlichen Schaltzuständen umschaltbar sind, dass ein Auswerteteil (7) vorhanden ist, dem von den Bewertern (112..., 212) gebildete logische Signale zuführbar sind, wobei im Auswerteteil (7) diejenige Positionsverschiebung der von einem Bildsensor abgeleiteten logischen Signale gegenüber den von dem anderen Bildsensor abgeleiteten logischen Signalen ermittelt wird, bei der die maximale Korrelation zwischen diesen logischen Signalen auftritt, dass dem Auswerteteil (7) eine die Entfernung des Gegenstandes anzeigende Vorrichtung (32) oder eine Vorrichtung zur Scharfeinstellung der Abbildung des Gegenstandes auf eine Bildebene nachgeordnet ist, dass die Bewerter (112..., 212) als Komparatoren ausgebildet sind und jeweils zwei Eingänge aufweisen, die über Schalttransistoren (T31, T31', T32, T32') mit den Ausgängen zweier Sensorelemente (11..., 21...) desselben Bildsensors verbunden sind, und dass diese beiden Sensorelemente (11..., 21...) zueinander benachbart oder in einem geringen Abstand voneinander angeordnet sind.

2. Schaltung nach Anspruch 1, dadurch gekennzeichnet, dass die Bewerter in einer der linearen Anordnung der Sensorelemente entsprechenden Reihe angeordnet sind und dass die Sensorelemente jedes Bildsensors (S1) in Längsrichtung desselben so bemessen sind, dass sie etwa der halben Abmessung der Bewerter in dieser Richtung entsprechen.

3. Schaltung nach Anspruch 1 oder 2, dadurch gekennzeichnet, dass jeder als Komparator ausgebildete Bewerter als Flip-Flop-Schaltung ausgebildet ist, deren Schaltungsknoten (34, 35) jeweils über Schalttransistoren T11, T31', T12, T32') mit einer Konstantspannungsquelle (U_{Ref}) verbunden sind.

4. Schaltung nach einem der Ansprüche 1 bis 3, dadurch gekennzeichnet, dass die Sensorelemente (11..., 21...) als Fotodioden ausgebildet sind.

5. Schaltung nach einem der Ansprüche 1 bis 3, dadurch gekennzeichnet, dass die Sensorelemente (11..., 21...) als Metall-Isolierschicht-Halbleiter-Kondensatoren (501, 502) ausgebildet sind.

6. Schaltung nach einem der Ansprüche 1 bis 3, dadurch gekennzeichnet, dass die Sensorelemente (11..., 21...) jeweils aus einem Metall-Isolierschicht-Halbleiter-Kondensator (501, 502) und einer Fotodiode (601) bestehen.

7. Schaltung nach einem der Ansprüche 1 bis 6, dadurch gekennzeichnet, dass die Ausgänge (A) der Bewerter über Schalttransistoren (T61..., T71...) an die Eingänge von einzelnen Stufen zweier den Bildsensoren (S1, S2) individuell zugeordneten Schieberegister (4, 5) nachgeschaltet sind und dass die Schieberegister (4, 5) Ausgänge (4a, 5a) zur seriellen Ausgabe der digital bewerteten Sensorsignale aufweisen.

8. Schaltung nach einem der Ansprüche 1 bis 7, dadurch gekennzeichnet, dass zu beiden Seiten der Sensorzeilen der Bildsensoren (S1, S2) jeweils eine Reihe von Bewertern (114, 136..., 125, 147...) vorgesehen ist, dass jeder Bewerter mit zwei Sensorelementen der betreffenden Sensorzeile verbindbar ist, dass jeder Bewerterreihe ein Schieberegister (4', 4'') zugeordnet ist, und dass in Serie zu den Ausgängen der Schieberegister (4', 4'') alternierend betätigbare elektronische Schalter vorgesehen sind.

9. Schaltung nach einem der Ansprüche 1 bis 7, dadurch gekennzeichnet, dass die Sensorelemente (11, 12...1(2n)) der Bildsensoren (S1) in zwei Zeilen angeordnet sind, die auf beiden Seiten einer Zeile von Bewertern (41...4n) liegen und dass die Bewerter (41) mit den seitlich von ihnen angeordneten Sensorelementen (11, 12) verbindbar sind.

10. Schaltung nach Anspruch 9, dadurch gekennzeichnet, dass die beiden Zeilen der Bildsensoren einen solchen Abstand voneinander aufweisen, dass neben jedem Bewerter (112) und zwischen den an ihn anschaltbaren Sensorelementen (11, 12) eine an den Bewerter (112) anschaltbare Stufe (41) eines Schieberegisters (4) angeordnet ist, dessen Ausgang (4a) zur seriellen Auslesung der Sensorsignale dient.

11. Schaltung nach einem der Ansprüche 1 bis 7, dadurch gekennzeichnet, dass die beiden Bildsensoren parallel nebeneinander angeordnet sind und die Bewerter jeweils auf der Seite des zugeordneten Bildsensors liegen.

12. Schaltung nach einem der Ansprüche 1 bis 11, dadurch gekennzeichnet, dass sie ganz oder teilweise auf einem dotierten Halbleiterkörper integriert ist.

13. Schaltung nach einem der Ansprüche 1 bis 12, gekennzeichnet durch die Verwendung in einer fotografischen oder elektronischen Kamera.

## Claims

1. A sensor-controlled range measurement circuit, characterised in that two linear image sensors (S1, S2) equipped with sensor elements (11..., 21...) are provided and on to each there are projected portions of the same lines of two images separately obtained from an object, that the sensor elements are followed by evaluators (112..., 212) which switch between two different switching states in dependence upon the magnitude of the electric charges optically produced in the sensor elements (11..., 21...), that an analysis component (7) is supplied with logic signals formed by the evaluators (112..., 212), where the analysis component (7) determines that position shift of the logic signals derived from one image sensor relative to the logic signals derived from the other image sensor at which the maximum correlation between these logic signals occurs, that the analysis component (7) is followed by a device (32) which displays the range of the object or by a device which serves to focus the image of the object to an image plane, that the evaluators (112..., 212) consist of comparators and each possess tow inputs connected via switching transistors (T31, T31', T32, T32') to the outputs of two sensor elements (11..., 21...) of the same image sensor, and that these sensor elements (11..., 21...) are arranged adjacent to one another or at a short distance from one another.

2. A circuit as claimed in Claim 1, characterised in that the evaluators are arranged in a row corresponding to the linear arrangement of the sensor elements, and that the sensor elements of each image sensor (S1) in the longitudinal direction thereof correspond approximately to half the dimensions of the evaluators in this direction.

3. A circuit as claimed in Claim 1 or 2, characterised in that each evaluator is a comparator that consists of a flip-flop stage whose circuit nodes (34, 35) are each connected via switching transistors (T11, T31', T12, T32') to a constant voltage source ($U_{Ref}$).

4. A circuit as claimed in one of Claims 1 to 3, characterised in that the sensor elements (11..., 21...) are photo-diodes.

5. A circuit as claimed in one of Claims 1 to 3, characterised in that the sensor elements (11..., 21...) are metal-insulating layer-semiconductor capacitors (501, 502).

6. A circuit as claimed in one of Claims 1 to 3, characterised in that the sensor elements (11..., 21...) each comprise a metalinsulating layer-semiconductor capacitor (501, 502) and a photodiode (601).

7. A circuit as claimed in one of Claims 1 to 6, characterised in that the outputs (A) of the evaluators are connected via switching transistors (T61..., T71...) to the inputs of individual stages of two shift registers (4, 5) which are individually assigned to the image sensors (S1, S2), and that the shift registers (4, 5) have outputs (4a, 5a) for the serial output of the sensor signals which have been evaluated in digital fashion.

8. A circuit as claimed in one of Claims 1 to 7, characterised in that on both sides of the sensor rows of the image sensors (S1, S2) there is in each case arranged a row of evaluators (114, 136..., 125, 147...), that each evaluator can be connected to two sensor elements of the row of sensors in question, that each row of evaluators is assigned a shift register (4', 4''), and that electronic switches which can be operated alternately are arranged in series with the outputs of the shift registers (4', 4'').

9. A circuit as claimed in one of Claims 1 to 7, characterised in that the sensor elements (11, 12...1(2n)) of the image sensors (S1) are arranged in two rows which are located on both sides of one row of evaluators (41...4n), and that the evaluators (41...4n), and that the evaluators (41) can be connected to the sensor elements (11, 12) arranged laterally thereto.

10. A circuit as claimed in Claim 9, characterised in that the two rows of image sensors are spaced from one another by a distance such that beside each evaluator (112) and between the sensor elements (11, 12) which can be connected thereto there is arranged a stage (41) of a shift register (4), which stage can be connected to the evaluator (112) and whose output (4a) serves for the serial read-out of the sensor signals.

11. A circuit as claimed in one of Claims 1 to 7, characterised in that the two image sensors are arranged in parallel beside one another the evaluators are each arranged at the side of the assigned image sensor.

12. A circuit as claimed in one of Claims 1 to 11, characterised in that it is entirely or partially integrated on a doped semi-conductor body.

13. A circuit as claimed in one of Claims 1 to 12, characterised by use in a photographic or electronic camera.

## Revendications

1. Circuit utilisé pour la mesure de distances commandées par des détecteurs, caractérisé par le fait qu'il est prévu deux détecteurs linéaires d'images (S1, S2) équipés d'éléments détecteurs (11..., 21...) sur lesquels des éléments respectifs des mêmes lignes de deux images, obtenues séparément d'un objet, sont projetées, et qu'en aval des éléments détecteurs se trouvent branchés des circuits de pondération (112..., 212), qui, en fonction de la valeur des charges électriques produites optiquement dans les éléments détecteurs (11..., 21...), peuvent être commutés entre deux états différents de commutation, qu'il est prévu une partie d'évaluation (7) à laquelle peuvent être envoyés des signaux logiques formés par les circuits de pondération (112..., 212), auquel cas dans la partie d'évaluation (7) se trouve déterminé le décalage de positions des signaux logiques, délivrés par un détecteur d'images par rapport aux signaux logiques délivrés par l'autre détecteur d'images, pour lequel on obtient la corrélation maximale entre ces signaux logiques, qu'un dispositif (32) affichant la distance de l'objet ou un dispositif servant à mettre au point l'image de l'objet dans un plan image est branché en aval de la partie d'évaluation (7), que les circuits de pondération (112..., 212) sont réalisés sous la forme de comparateurs, et comportent respectivement deux entrées, qui sont reliées par l'intermédiaire de transistors de commutation (T31, T31', T32, T32') aux sorties de deux éléments détecteurs (11..., 21...) du même détecteur d'images et que ces éléments détecteurs (11..., 21...) sont disposés en étant voisins l'un de l'autre ou à une faible distance l'une de l'autre.

2. Circuit suivant la revendication 1, caractérisé par le fait que les circuits de pondération sont disposés selon une rangée correspondant à la disposition linéaire des éléments détecteurs et que les éléments détecteurs de chaque détecteur d'images (S1) sont dimensionnés suivant la direction longitudinale desdits détecteurs de manière à correspondre approximativement à la moitié de la dimension du circuit de pondération suivant cette direction.

3. Circuit suivant la revendication 1 ou 2, caractérisé par le fait que chaque circuit de pondération réalisé sous la forme d'un comparateur est agencé sous la forme d'un circuit à bascule bistable dont les nœuds de commutation (34, 35) sont reliés respectivement par l'intermédiaire de transistors de commutation (T11, T31', T12, T32') à une source de tension constante ($U_{REF}$).

4. Circuit suivant l'une des revendications 1 à 3, caractérisé par le fait que les éléments détecteurs (11..., 21...) sont réalisés sous la forme de photodiodes.

5. Circuit suivant l'une des revendications 1 à 3, caractérisé par le fait que les éléments détecteurs (11..., 21...) sont réalisés sous la forme de condensateurs métal-couche isolante-semiconducteur (501, 502).

6. Circuit suivant l'une des revendications 1 à 3, caractérisé par le fait que les éléments (11..., 21...) sont constitués respectivement par un condensateur métal-couche isolante-semiconducteur (501, 502) et par des photodiodes (601).

7. Circuit suivant l'une des revendications 1 à 6, caractérisé par le fait que les sorties (A) des circuits de pondération sont raccordées respectivement par l'intermédiaire de transistors de commutation (T61..., T71...) aux entrées des différents étages de deux registres à décalage (4, 5) associés individuellement aux détecteurs d'images (S1, S2), et que les registres à décalage (4, 5) comportent des sorties (4a, 5a) servant à délivrer en série les signaux de détection, pondérés numériquement.

8. Circuit suivant l'une des revendications 1 à 7, caractérisé par le fait qu'il est prévu, des deux côtés des lignes des détecteurs d'images (S1, S2), des séries respectives de circuits de pondération (114, 136..., 125, 147...), que chaque circuit de pondération peut être relié à deux éléments détecteurs de la ligne concernée d'un détecteur, qu'un registre à décalage (4', 4'') est associé à chaque série de circuits de pondération, et qu'il est prévu des commutateurs électroniques pouvant être actionnés en alternance, qui sont montés en série avec les sorties des registres à décalage (4', 4'').

9. Circuit suivant l'une des revendications 1 à 7, caractérisé par le fait que les éléments détecteurs (11, 12...1(2n)) des détecteurs d'images (S1) sont disposés suivant deux lignes qui sont situés des deux côtés d'une ligne de circuits de pondération (41...4n) et que les circuits de pondération (41) peuvent être reliés aux éléments détecteurs (11, 12) qui sont disposés à côté d'eux.

10. Circuit suivant la revendication 9, caractérisé par le fait que les deux lignes de détecteurs d'images sont à une distance réciproque telle qu'à côté de chaque circuit de pondération (112) et entre les éléments détecteurs (11, 12), raccordés à ce détecteur, se trouve disposé un étage (41), pouvant être raccordé au circuit de pondération (112) d'un registre à décalage (4) dont la sortie (4a) sert à lire en série les signaux de détection.

11. Circuit suivant l'une des revendications 1 à 7, caractérisé par le fait que les deux détecteurs d'images sont disposés côte-à-côte en parallèle et que les circuits de pondération sont situés respectivement sur le côté du détecteur d'images associé.

12. Circuit suivant l'une des revendications 1 à 11, caractérisé par le fait qu'il est intégré en totalité ou en partie sur un corps semiconducteur dopé.

13. Circuit suivant l'une des revendications 1 à 12, caractérisé par son utilisation dans un appareil de prises de vues photographique ou électronique.

FIG 1

# FIG 2

# FIG 3

FIG 4

Φ2  URef  Φ2    A  Φ2  URef  Φ2

T11  ○Φ1                    Φ1○  T12

112

T31'              T32'

402  404

403  405  ↓401      401↱

11  T31        T32  12

FIG 5

ΦK  Φ2'  URef  Φ2'    A  Φ2'  URef  Φ2'  ΦK

T11  ○Φ1'                    Φ1'○  T12

112

T31'              T32'

501

402

503

502  405  ↓401      502

11  T31        T32  12

FIG 6

ΦK  Φ2'  URef  Φ2'    A  Φ2'  URef  Φ2'  ΦK

T11  ○Φ1'                    Φ1'○  T12

112

T31'              T32'

501

601  502  405  ↓401      502  601

11  T31        T32  12

# FIG 7

# FIG 8

# FIG 9

# FIG 10

FIG 11

FIG 12